# EUROPÄISCHE PATENTSCHRIFT

(11) **EP 1 960 627 B1**
(45) Veröffentlichungstag und Bekanntmachung des Hinweises auf die Patenterteilung: **20.01.2010**
(21) Anmeldenummer: 06828669.9
(22) Anmeldetag: 14.12.2006
(51) Int. Cl.: E05F 15/00, B60J 7/02

(54) **ÖFFNUNGSFÄHIGES FAHRZEUGDACH**
OPENABLE VEHICLE ROOF
TOIT OUVRANT DE VEHICULE

(30) Priorität: 15.12.2005 DE 102005060043
(43) Veröffentlichungstag der Anmeldung: 27.08.2008
(73) Patentinhaber: Webasto AG, 82131 Stockdorf (DE)
(72) Erfinder: FAERBER, Manfred, 82407 Wielenbach (DE); SKORIANZ, Gerhard, 82216 Maisach (DE); ZUNZER, Andreas, Josef, 80687 München (DE)
(86) Internationale Anmeldenummer: PCT/DE2006/002234
(87) Internationale Veröffentlichungsnummer: WO 2007/076801

(56) Entgegenhaltungen:
- DE-C1- 19 913 106
- DE-U1- 29 700 764

## Beschreibung

Die Erfindung betrifft ein öffnungsfähiges Fahrzeugdach mit den Merkmalen des Oberbegriffs des Patentanspruches 1.

Ein öffnungsfähiges Fahrzeugdach mit einer Einklemmschutzeinrichtung ist aus der DE 199 13 106 Cl bekannt und umfasst eine Dachöffnung, die mittels eines in der Regel in seitlichen Führungsschienen geführte Deckelelements wahlweise verschließbar oder zumindest teilweise offenbar ist und von einem Hohlprofil umgeben ist, das als Sensor zur Erkennung einer etwaigen Einklemmsituation dient und hierzu mit metallischen Leitern versehen sind. In einer Einklemmsituation wird das Hohlprofil so stark verformt, dass die metallischen Leiter kurzgeschlossen werden, was wiederum ein Schalten der Einklemmschutzeinrichtung auslöst und insbesondere einen Antriebsmotor für das Deckelelement stoppt bzw. reversiert. Diese Einklemmschutzeinrichtung erkennt aber beispielsweise nicht, wenn ein Fahrzeuginsasse von innen in eine im Bereich der Führungsschienen angeordnete Antriebsmechanik für das Deckelelement greift.

Ferner ist aus der DE 297 00 764 U1 eine bandförmige und flexible Schaltanordnung aus einem Dichtungskörper bekannt, der über seine Länge hohl ausgebildet ist und ein so genanntes Dichtungsprofil darstellt. Die Schaltanordnung umfasst vier in dem Dichtungskörper angeordnete elektrisch leitende Bereiche, die voneinander elektrisch isoliert sind. Durch eine Druckbelastung des Dichtungskörpers wird ein elektrischer Schaltvorgang ausgelöst. Der Dichtungskörper kann als Einklemmschutzeinrichtung im Bereich von Seitenscheiben eines Autos oder im Bereich eines Schiebedachs eingesetzt werden.

Des weiteren ist es bekannt, aus optischen Gründen, aus akustischen Gründen oder auch aus Sicherheitsgründen eine Verblendung vorzusehen, mittels der eine Antriebmechanik für das Deckelelement, die im Bereich von dessen seitlichen Führungsachienen angeordnet ist, verdeckt wird, so dass diese vom Fahrzeuginnenraum aus nicht einsehbar ist. Insbesondere wird zu diesen Zwecken häufig ein sich in Fahrzeuglängsrichtung erstreckender Faltenbalg eingesetzt, der einer Ausstellbewegung des Deckelelements folgt.

Der Erfindung liegt die Aufgabe zugrunde, ein öffnungefähiges Fahrzeugdach der einleitend genannten Gattung mit einer insbesondere für Fahrzeuginsassen wirksamen Einklemmschutzvorrichtung bereitzustellen.

Diese Aufgabe ist erfindungsgemäß durch das öffnungsfähige Fahrzeugdach mit den Merkmalen des Patentanspruchs 1 gelöst.

Der Kern der Erfindung besteht mithin darin, dass beidseits einer Dachöffnung im Bereich von Führungsschienen für ein bewegliches Deckelelement jeweils ein vorzugsweise über die Erstreckung der Dachöffnung in Fahrzeuglängsrichtung wirksames Einklemmschutzsystem bereitgestellt wird, das von dem Schaltelement gebildet ist und direkt an der jeweiligen Führungsschiene angebracht sein kann. Die Einklemmschutzeinrichtung im Sinne der Erfindung kann an einer geeigneten Stelle der jeweiligen Führungsschienen vom Fahrzeuginnenraum aus betrachtet vor der Antriebsmechanik für das Deckelelement angeordnet sein, so dass die Einklemmschutzeinrichtung einen Fahrzeuginsassen sowohl gegen einen Eingriff in die sich gegebenenfalls bewegende Antriebsmechanik als auch gegen ein Einklemmen durch das Deckelelement schützen kann. Bei Erkennen einer Einklemmsituation wird ein entsprechendes Signal an die Antriebmotorsteuerung übergeben-und die Bewegung des Deckelelements gestoppt oder auch reversiert. Das leistenförmige Schaltelement ist eine Profilleiste; die gefedert gelagert ist und mit einem Schalter zusammenwirkt, der mit der Steuerung des Deckelelements verbunden ist. In einer Einklemmsituation wird die Profilleiste gegen die Federkraft niedergedrückt, so dass der Schalter schaltet und ein entsprechendes Signal an die Steuerung zur Bewegung des Deckelelements übergibt. Zumindest in Schließstellung des Deckelelements ist die Profilleiste vorzugsweise von dem Deckelelement beabstandet. Bei vorliegen einer Einklemmsituation ist dieser Abstand von einem eingeklemmten Körperteil oder Gegenstand überbrückt.

Grundsätzlich kann das leistenförmige Schaltelement direkt an der zugeordneten Führungsschiene oder gegenüberliegend von der zugeordneten Führungsschiene an dem Deckelelement angebracht sein Ein Anbringen an der Führungsschiene ist aber aus Sicherheitsgründen vorteilhaft, da etwaig bevorstehende Einklemmsituationen dann gegebenenfalls schon vorzeitig erkannt werden können, ohne dass eine gefährdete Person tatsächlich zwischen dem beweglichen Deckelelements und dem Fahrzeugaufbau eingeklemmt wird.

Bei einer speziellen Ausführungsform des Fahrzeugdachs nach der Erfindung ist die Profilleiste ein U-Profil, zwischen dessen Schenkeln ein vertikal ausgerichteter Steg der Führungsschiene eingreift. Ein derartiger, insbesondere laschenartiger Steg kann bei bekannten Schiebedach- bzw. Hubschiebedachkonstruktionen ohnehin vorhanden sein und dient beispielsweise auch dazu, bestimmte Funktionselemente oder auch feste Dachelemente zu fixieren. Das Schaltelement kann auch aus mehreren ineinander greifenden U-Profilen gebildet sein, so dass es zur Ausbildung einer Blende in vertikaler Richtung, d. h. in Richtung der Schenkel der U-Profile, teleskopierbar ist.

Zweckmäßig ist die Profilleiste an dem Steg bzw. der Lasche der zugeordneten Führungsschiene verrastet und mit Anschlägen zur Begrenzung der vertikalen Bewegung des U-Profils versehen.

Bei einer weiteren speziellen Ausführungsform des Fahrzeugdachs nach der Erfindung ist die Profilleiste über ein Gelenk an die zugeordnete Führungsschiene angebunden und somit gesichert. In diesem Fall kann es erforderlich sein, zusätzlich eine seitliche Führung für die Profilleiste vorzusehen, die ein seitliches verkippen der Profilleiste gegenüber der zugeordneten Führungsschiene verhindert. Im Fall der oben genannten, als U-Profil ausgebildeten Profilleiste kann die seitliche Führung von den Schenkeln des U-Profils gebildet sein. Die Profilleiste kann um eine in Fahrzeugquerrichtung oder auch um eine in Fahrzeuglängsrichtung ausgerichtete Schwenkachse verschwenkbar sein.

Wenn die Profilleiste um eine in Fahrzeuglängsrichtung ausgerichtete Schwenkachse verschwenkbar ist, kann die jeweils zugeordnete Führungsschiene einen C-Profilartigen Abschnitt aufweisen, in dem das leistenförmige Schaltelement über zumindest einen zylindrischen Abschnitt schwenkbar gelagert ist. Das Schaltelement ist mittels eines Federelements nach oben vorgespannt und wirkt mit dem ebenfalls vorzugsweise an der Führungsschiene angeordneten Schalter zusammen.

Alternativ kann ein scharnierartiges Gelenk vorgesehen sein, bei dem das leistenförmige Schaltelement und die zugeordnete Führungsschiene jeweils miteinander fluchtende Hülsenabschnitte aufweisen, die von einer Gelenkstange durchgriffen sind, die mit der Führungsschiene oder dem Schaltelement im Spielsitz und dem jeweils anderen Bauelement im Presssitz verbunden sind.

Bei einer weiteren speziellen Ausführungsform des Fahrzeugdachs nach der Erfindung ist die Profilleiste eine Blende für eine-Antriebsmechanik des Deckelelements Bei dieser Ausführungsform führt die Profilleiste bei einer Ausstellbewegung des Deckelelements vorzugsweise ebenfalls eine Ausstellbewegung oder eine Hubbewegung aus, so dass auch im ausgestellten und gegebenenfalls zurückgefahrenen Zustand des Deckelelements eine verblendung der Antriebsmechanik für das Deckelelements gewährleistet ist. Beim Schließen des Deckelelements wird die Profilleiste wieder abgesenkt bzw. zurückgeschwenkt. Die Absenkbewegung ist ohne Vorliegen einer Einklemmsituation durch die Vorspannung und die Bauhohe der Lagerfeder(n) für die Profilleiste beschränkt. Wenn die Profilleiste ein U-Profil ist und auf eine vertikale Lasche aufgesetzt ist, ist der Ausstellweg des U-Profils durch die Höhe der Lasche und damit korrespondierend durch die Höhe der Schenkel des U-Profils begrenzt.

Bei einer alternativen Ausführungsform eines Fahrzeugdachs ist das leistenförmige Schaltelement ein vorzugsweise in seiner Querrichtung komprimierbares Kunststoffprofil, das mit mindestens einem elektrischen Leiter versehen ist. Ein derartiges Kunststoffprofil kann als kapazitives Sensorelement oder auch als resistives Sensorelement ausgelegt sein.

Bei Auslegung als kapazitives Sensorelement ist das Kunststoffprofil vorzugsweise mit nur einem Leiter versehen. Bei Auslegung als resistives Sensorelement ist das Kunststoffprofil vorzugsweise ein Hohlprofil mit zwei elektrischen Leitern, die bei einer Einklemmsituation, bei der das Kunststoffprofil in Querrichtung komprimiert wird, kurzgeschlossen werden. Die beiden elektrischen Leiter sind an der Innenwandung des Hohlprofils angeordnet. Denkbar ist es auch, das Hohlprofil selbst mit zwei aus einem elektrisch leitfähigen Material gefertigten Wandungsabschnitten zu versehen, die voneinander isoliert sind und die beiden Leiter darstellen.

Insbesondere bei Ausbildung der Einklemmschutzeinrichtung mit einem kapazitiven Sensorelement kann schon eine Annäherung an eine der Führungsschienen als Einklemmsituation gewertet werden, so dass eine etwaige Einklemmsituation schon frühzeitig erkannt wird und entsprechende Gegenmaßnahmen, wie ein Stoppen oder Reversieren eines Deckelelementantriebs, eingeleitet werden kann.

Das Kunststoffprofil kann mit einer Adapterkappe versehen sein, die aus Gründen der Kabelführung vorzugsweise möglichst nahe an der Antriebsmotorsteuerung angeordnet ist.

Weitere Vorteile und vorteilhafte Ausgestaltungen des Gegenstandes nach der Erfindung sind der Beschreibung, der Zeichnung und den Patentansprüchen entnehmbar.

Ausführungsbeispiele eines Fachzeugdachs nach der Erfindung sind in der Zeichnung schematisch vereinfacht dargestellt und werden in der nachfolgenden Beschreibung näher erläutert. Es zeigt:
- Fig. 1: eine Draufsicht auf ein Fahrzeugdach mit einem außen laufenden Schiebedachdeckelelement;
- Fig. 2: einen Schnitt durch einen Führungsschienenbereich des Fahrzeugdachs nach Fig. 1 entlang der Linie II-II in Fig. 1;
- Fig. 3: einen Fig. 2 entsprechenden Schnitt durch einen Führungsschienenbereich einer alternativen Ausführungsform eines Fahrzeugdachs;
- Fig. 4: einen Fig. 2 entsprechenden Schnitt durch einen Führungsschienenbereich einer weiteren Ausführungsform eines erfindungsgemäß ausgelegten Fahrzeugdachs;
- Fig. 5: eine perspektivische Ansicht eines Befestigungsbereichs für eine Einklemmschutzeinrichtung bei der in Fig. 4 dargestellten Führungsschiene;
- Fig. 6: eine perspektivische Ansicht der Einklemmschutzeinrichtung; und
- Fig. 7: eine perspektivische Draufsicht auf eine weitere Ausführungsform in Explosionsdarstellung.

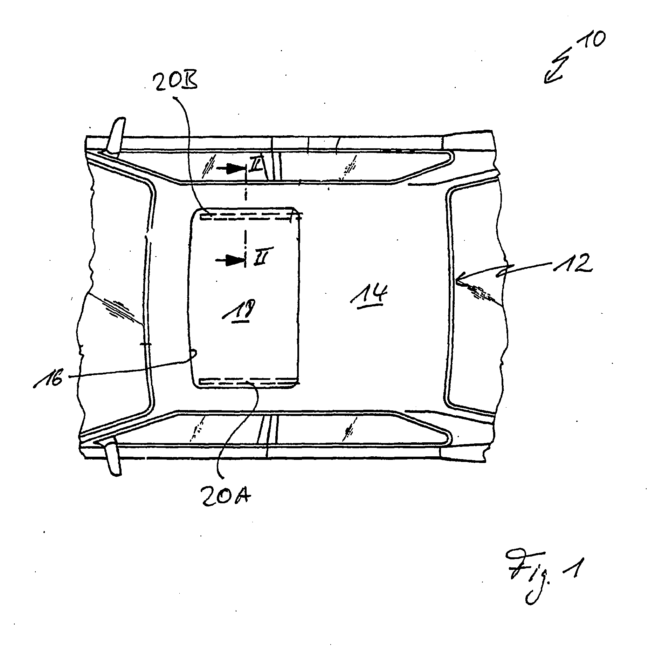

In Fig. 1 ist ein Kraftfahrzeug 10 dargestellt, das mit einem erfindungsgemäß ausgelegten Fahrzeugdach 12 versehen ist. Das Fahrzeugdach 12 umfasst einen hinteren festen Dachbereich 14, an den sich vorne eine Dachöffnung 16 anschließt, welche mittels eines beispielsweise aus einer transparenten Glasscheibe bestehenden Deckelelements 18 wahlweise verschließbar oder zumindest teilweise freigebbar ist. Das Deckelelement 18 ist als außen laufender Schiebedachdeckel ausgebildet, der mithin beim Öffnen zunächst bezüglich einer in Fahrzeugquerrichtung verlaufenden Schwenkachse ausgeschwenkt und an der Fahrzeugaußenseite über den hinteren festen Dachbereich 14 gefahren wird.

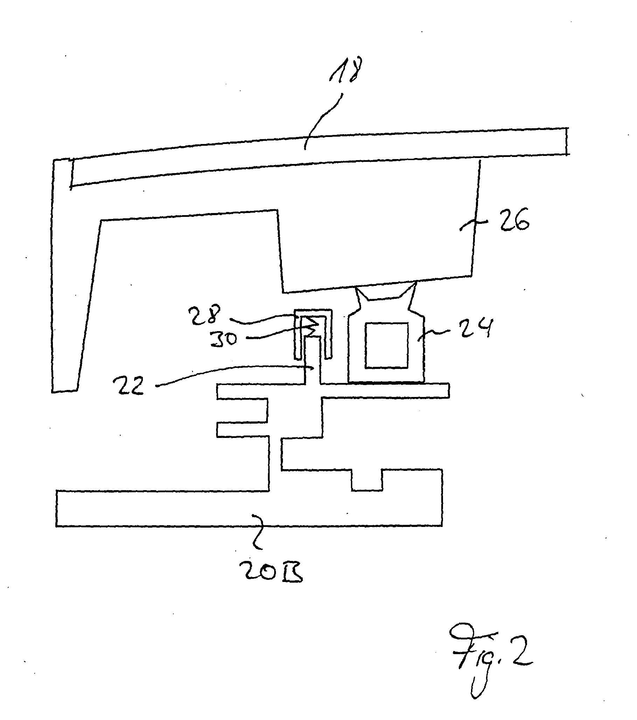

Die Dachöffnung 16 ist beidseits jeweils von einer sich in Fahrzeuglängsrichtung erstreckenden Führungsschiene 20A bzw. 20B begrenzt, in welchen eine hier nicht näher dargestellte Antriebsmechanik für das Deckelelement 18 in Fahrzeuglängsrichtung verschiebbar geführt ist. Die beiden Führungsschienen 20A und 20B sind spiegelsymmetrisch zueinander ausgebildet, wobei in Fig. 2 ein Querschnitt durch die in Fahrtrichtung rechte Führungsschiene 20B dargestellt ist.

Die Führungsschiene 20B weist neben Führungskanälen für Gleiter und Antriebskabel für das Deckelelement 18 eine sich in Fahrzeuglängsrichtung erstreckende, vertikal nach oben abstehende Lasche 22 auf, die unter anderem zur Befestigung von Funktionselementen, wie Teilen der Antriebsmechanik für das Deckelelement 18, dienen kann.

Bezogen auf den Fahrzeuginnenraum innenseitig von der Lasche 22 ist des Weiteren eine Akustikdichtung 24 angeordnet, die als Schallschutzelement dient und in Schließstellung des Deckelelements 18 an einer Umschäumung 26 anliegt, die an der Unterseite des Deckelelements 18 ausgebildet ist.

Auf die stegartige Lasche 22 ist des Weiteren ein U-Profil 28 derartig aufgesetzt, dass die sich über die Länge der Führungsschiene 20B erstreckende Lasche 22 zwischen den Schenkeln des U-Profils eingreift. Das U-Profil 28, das ein leistenförmiges Schaltelement darstellt, ist vorteilhafterweise mittels eines Federelements 30 gelagert. Das U-Profil 28 ist über hier nicht näher dargestellte Rastnasen an der Lasche 22 fixiert.

Das U-Profil 28 dient als Einklemmschutzeinrichtung und wirkt hierzu mit einem nicht näher dargestellten elektrischen Schalter zusammen, der mit einer Steuerung für das Deckelelement 18 verbunden ist. Der Schalter schaltet, wenn das U-Profil 28 entgegen der Kraft der Feder 30 beispielsweise um 1 mm niedergedrückt wird. Eine derartige Einklemmsituation liegt beispielsweise vor, wenn ein Gegenstand oder ein Körperteil eines Fahrzeuginsassen einen vertikalen Druck auf das U-Profil ausübt, was auch der Fall ist, wenn der Gegenstand oder das Körperteil beim Schließen des Deckelelements 16 in den Zwischenraum zwischen der Kunststoffumschäumung 26 und dem U-Profil eingebracht wird. Beim Schalten des Schalters erfolgt eine Notabschaltung oder Reversierung des Deckelantriebs.

Betrachtet vom Fahrzeuginnenraum aus sind die Lasche 22 und das auf die Lasche 22 aufgesetzte U-Profil 28 hinter der Akustikdichtung 24 angeordnet. Da die Akustikdichtung 24 höher ausgeführt ist als die Lasche 22 mit dem aufgesetzten U-Profil 28, ist die von dem U-Profil 28 gebildete Einklemmschutzeinrichtung vom Fahrzeuginnenraum aus nicht einsehbar. Bei einer alternativen Ausführungsform könnten die Lasche und das auf die Lasche aufgesetzte U-Profil auch vor der Akustikdichtung angeordnet sein.

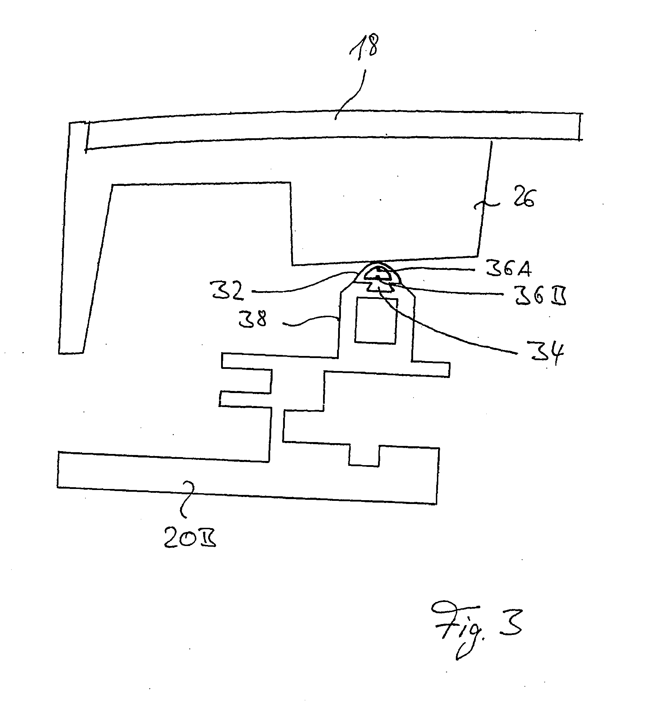

Fig. 3 ist eine alternative Ausführungsform einer Einklemmschutzeinrichtung bei einem außen laufenden Schiebedach der in Fig. 1 dargestellten Art gezeigt. Diese Ausführungsform entspricht im Wesentlichen derjenigen nach den Figuren 1 und 2, unterscheidet sich aber von dieser dadurch, dass deren Führungsschienen 20A, 20B keine vertikalen Laschen aufweisen, auf die jeweils eine EinklemmSchutzeinrichtung aufgesetzt ist.

Vielmehr sind die Führungsschienen 20A, 20B, von denen in Fig. 3 ebenfalls die in Fahrtrichtung rechte Führungsschiene 20B dargestellt ist, derartig ausgeführt, dass an ihnen jeweils ein Absatz 38 ausgebildet ist, auf den ein leistenförmiges Kunststoffhohlprofil 32 aufgesetzt ist, das über einen im Querschnitt schwalbenschwanzartigen Fuß 34 mit dem Absatz 38 verbunden ist.

Das ein leistenförmiges Schaltelement darstellende Kunststoffhohlprofil 32 dient als Einklemmschutzeinrichtung und weist hierzu an seiner Innenwandung zwei elektrische Leiter 36A, 36B auf, die bei einem ausreichend großen lateralen Druck auf das Kunststoffhohlprofil 32 kurzgeschlossen werden.

Das Kunststoffhohlprofil 32 kann mithin als resistiver Sensor arbeiten, der schaltet, wenn ein zusätzlicher Gegenstand oder ein Körperteil eines Fahrzeiginsassen zwischen die Kunststoffumschäumung 26 des Deckelelements 18 und den Absatz 38 der Führungsschiene 20B eingebracht wird, da dann eine Kompression des Kunststoffhohlprofils 32 in dessen Querrichtung erfolgt.

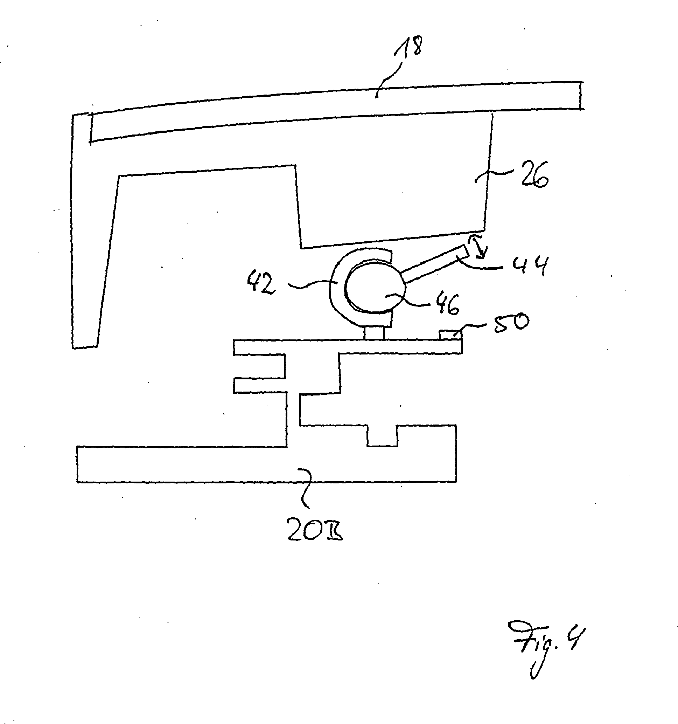

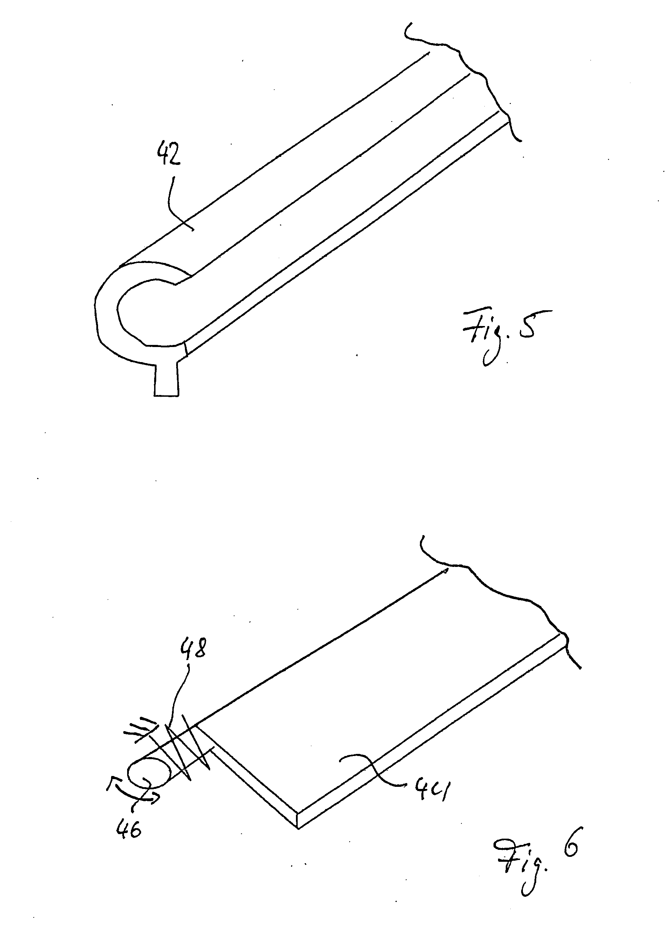

In den Figuren 4 bis 6 ist eine weitere Ausführungsform einer Einklemmschutzeinrichtung bei einem außen laufenden Schiebedach der in Fig. 1 dargestellten Art gezeigt. Diese Ausführungsform unterscheidet sich von der Ausführungsform nach den Figuren 1 und 2 dadurch, dass sie seitliche Führungsschienen 20A, 20B umfasst, die jeweils an ihrer Oberseite mit einer Aufnahme 42 in Form eines C-Profils versehen sind, in der ein leistenförmiges, als Einklemmschutzeinrichtung dienendes Schaltelement 44 gelagert ist, das im Wesentlichen plattenförmig ausgebildet ist, in Richtung Fahrzeuglängsmittelebene weist und über einen zylindrischen Abschnitt 46 in der Aufnahme 42 der Führungsschiene 20A, 20B gelagert ist, so dass es um eine sich im Wesentlichen in Fahrzeuglängsrichtung verlaufenden Schwenkachse verschwenkbar ist. Das Schaltelement 44 dient auch als Blende zur Abschirmung der Mechanik zur Betätigung des Deckelelements.

In Ruhestellung ist das Schaltelement mittels einer Federeinrichtung 48, die an dem zylindrischen Abschnitt 46 angreift, nach oben vorgespannt. Wenn ein Gegenstand oder ein Körperteil zwischen dem Deckelelement und der betreffende Führungsschiene 20A bzw. 20B angeordnet ist, wird beim Schließen des Deckelelements das Schaltelement 44 nach unten gedrückt, so dass es auf einen Schalter 50 wirkt und die Bewegung des Deckelelements mittels der Deckelelementantriebssteuerung gestoppt oder reversiert wird.

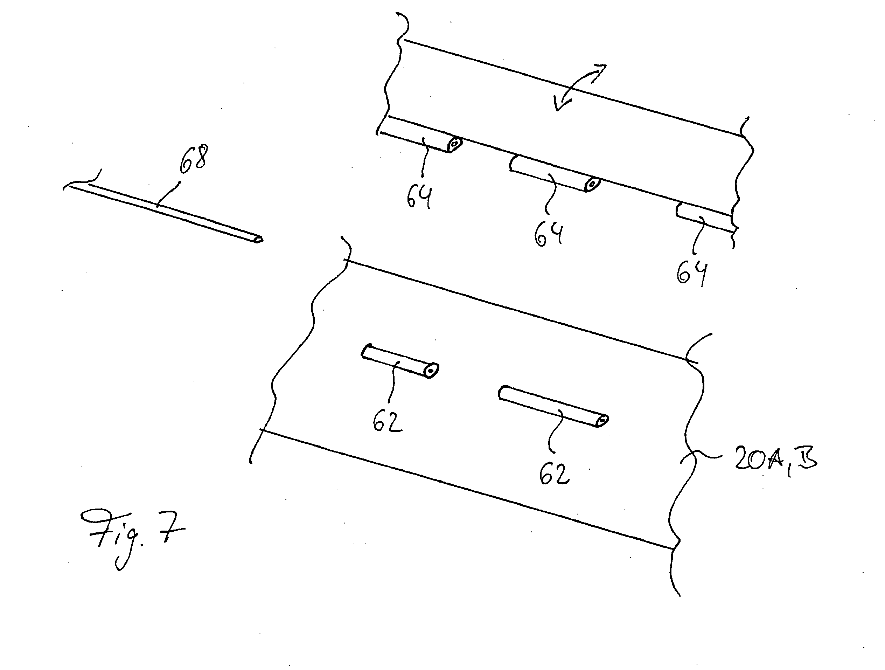

In Fig. 7 ist eine weitere Ausführungsform ein erfindungsgemäß ausgebildeten Einklemmschutzeinrichtung bei einem öffenbaren Fahrzeugdach darstellt. Diese Ausführungsform entspricht im Wesentlichen derjenigen nach den Figuren 4 bis 6 und unterscheidet sich von dieser dadurch, dass an den Führungsschienen 20A, 20B jeweils Hülsen 62 ausgebildet sind, die mit Hülsen 64 fluchten, die an einem leistenförmigen Schaltelement 66 ausgebildet sind. Die Hülsen 64 und 66 sind von einer Lagerstange 68 durchgriffen, wobei bei den Hülsen 64 ein Spielsitz und bei den Hülsen 66 ein Presssitz mit der Lagerstange 68 vorgesehen ist.

Das Schaltelement 66 ist wiederum mittels eines hier nicht näher dargestellten Federelements, das an der Lagerstange 68 oder direkt an dem Schaltelement 66 angreifen kann, nach oben vorgespannt und wirkt beim Niederdrücken mit einem ebenfalls nicht dargestellten Schalter zum Notstopp der Deckelelementbewegung zusammen.

### Bezugszeichen

- 10: Kraftfahrzeug
- 12: Fahrzeugdach
- 14: Fester Dachbereich
- 16: Dachöffnung
- 18: Deckelelement
- 20A, 20B: Führungsschienen
- 22: Lasche
- 24: Akustikdichtung
- 26: Kunststoffumschäumung
- 28: U-Profil
- 30: Feder
- 32: Kunststoffhohlprofil
- 34: Fuß
- 36A, 36B: Elektrische Leiter
- 38: Absatz
- 39: Aufnahme
- 44: Schaltelement
- 46: zylindrischer Abschnitt
- 48: Federelement
- 50: Schalter
- 62: Hülsen
- 64: Hülsen
- 66: Schaltelement
- 68: Lagerstange

## Patentansprüche

1. Öffnungsfähiges Fahrzeugdach, umfassend mindestens ein in seitlichen Führungsschienen (20A, 20B) geführtes Deckelelement (18), mittels dessen eine Dachöffnung (16) wahlweise verschließbar oder zumindest teilweise freigebbar ist, sowie entlang der Führungsschienen (20A, 20B) jeweils eine Einklemmschutzeinrichtung, **dadurch gekennzeichnet, dass** die Einklemmschutzeinrichtungen jeweils von einem leistenförmigen Schaltelement (28, 32) gebildet sind, das mit der jeweiligen Führungsschiene (20A, 20B) zusammenwirkt und das mit einer Steuerung eines Deckelelementantriebs verbunden ist, und dass das leistenförmige Schaltelement (28) aus mindestens einer Profilleiste gebildet ist, die gefedert gelagert ist und mit einem elektrischen Schalter zusammenwirkt, der bei Vorliegen einer Einklemmsituation, bei der die Profilleiste niedergedrückt wird, schaltet.

2. öffnungsfähiges Fahrzeugdach nach Anspruch 1, **dadurch gekennzeichnet, dass** die Profilleiste (28) ein U-Profil ist, zwischen dessen Schenkeln eine vertikal ausgerichtete Lasche (22) der zugeordneten Führungsschiene (20A, 20B) eingreift.

3. Öffnungsfähiges Fahrzeugdach nach Anspruch 1 oder 2, **dadurch gekennzeichnet, dass** die Profilleiste über ein Gelenk an die zugeordnete Führungsschiene angebunden ist.

4. Öffnungsfähiges Fahrzeugdach nach einem der Ansprüche 1 bis 3, **dadurch gekennzeichnet, dass** das Deckelelement (16) mit seinem hinteren Rand bezüglich eines festen Dachbereichs (14) aus einer Schließstellung nach oben ausschwenkbar ist und die Profilleiste eine Blende für eine Antriebsmechanik des Deckelelements (18) ist.

5. Öffnungsfähiges Fahrzeugdach nach Anspruch 1, **dadurch gekennzeichnet, dass** das Schaltelement aus mindestens zwei in vertikaler Richtung teleskopierbaren U-Profilen gebildet ist.

## Claims

1. Openable vehicle roof, comprising at least one cover element (18) which is guided in lateral guide rails (20A, 20B) and by means of which a roof opening (16) can be selectively closed off or at least partially opened, and, along the guide rails (20A, 20B), in each case one anti-trapping device, **characterized in that** the anti-trapping devices are formed in each case by a strip-shaped switching element (28, 32) which interacts with the respective guide rail (20A, 20B) and which is connected to a controller of a cover element drive and that the strip-shaped switching element (28) is formed from at least one profiled strip which is mounted in a resilient fashion and which interacts with an electrical switch which switches in the presence of a trapping situation in which the profiled strip is pushed downwards.

2. Openable vehicle roof according to Claim 1, **characterized in that** the profiled strip (28) is a U-shaped profile, between the limbs of which engages a vertically aligned lug (22) of the associated guide rail (20A, 20B).

3. Openable vehicle roof according to Claim 1 or 2, **characterized in that** the profiled strip is connected to the associated guide rail by means of a joint.

4. Openable vehicle roof according to one of Claims 1 to 3, **characterized in that** the cover element (18) can be pivoted upward with its rear edge with respect to a fixed roof region (14) from a closed position, and the profiled strip is a faceplate for a drive mechanism of the cover element (18).

5. Openable vehicle roof according to Claim 1, **characterized in that** the switching element is formed from at least two U-shaped profiles which are telescopic in the vertical direction.

## Revendications

1. Toit ouvrant de véhicule, comprenant au moins un élément couvrant (18) guidé dans des rails de guidage (20A, 20B) latéraux et à l'aide duquel une ouverture de toit (16) peut être au choix fermée ou au moins en partie libérée, ainsi qu'un dispositif de pincement situé respectivement le long des rails de guidage (20A, 20B), **caractérisé en ce que** les dispositifs de pincement sont formés respectivement par un élément de commutation (28, 32) en forme de baguette qui interagit avec le rail de guidage (20A, 20B) respectif et est relié à une commande d'un entraînement d'élément couvrant, et **en ce que** l'élément de commutation (28) en forme de baguette est formé d'au moins une baguette profilée disposée sur ressort et interagissant avec un commutateur électrique commutant en cas de pincement dans laquelle la baguette profilée est comprimée vers le bas.

2. Toit ouvrant de véhicule selon la revendication 1, **caractérisé en ce que** la baguette profilée (28) est un profilé en U entre les côtés desquels s'engrène une bride (22) orientée verticalement du rail de guidage (20A, 20B).

3. Toit ouvrant de véhicule selon la revendication 1 ou 2, **caractérisé en ce que** la baguette profilée est reliée au rail de guidage associé via un joint articulé.

4. Toit ouvrant de véhicule selon l'une quelconque des revendications 1 à 3, **caractérisé en ce que** l'élément couvrant (18) peut être pivoté avec son bord arrière, vers le haut et vers l'extérieur, hors d'une position de fermeture, par rapport à une zone de toit fixe (14) et **en ce que** la baguette profilée est un cache prévu pour le mécanisme d'entraînement de l'élément couvrant (18).

5. Toit ouvrant de véhicule selon la revendication 1, **caractérisé en ce que** l'élément de commutation est composé d'au moins deux profilés en U disposés de façon télescopique dans la direction verticale.
